Europäisches Patentamt

European Patent Office

Office européen des brevets

(19)

(11) Publication number: **0 350 297**
**A2**

# (12) EUROPEAN PATENT APPLICATION

(21) Application number: **89306847.8**

(22) Date of filing: **06.07.89**

(51) Int. Cl.⁵: **H 02 M 3/335**

(30) Priority: **08.07.88 GB 8816282**

(43) Date of publication of application:
**10.01.90 Bulletin 90/02**

(84) Designated Contracting States:
**BE CH DE FR GB IT LI LU NL**

(71) Applicant: **Ogden, Kevin**
**10 Beresford Gardens Chandlers Ford**
**Southampton Hampshire S05 2LZ (GB)**

(72) Inventor: **Ogden, Kevin**
**10 Beresford Gardens Chandlers Ford**
**Southampton Hampshire S05 2LZ (GB)**

(74) Representative: **Evans, David Charles et al**
**F.J. CLEVELAND & COMPANY 40-43, Chancery Lane**
**London, WC2A 1JQ (GB)**

(54) **Improved high frequency switching in coupled inductor power supplies.**

(57) The present invention relates to a fly-back circuit in which the energy stored in a coupled inductor (n,5) on the forward cycle is transferred to a secondary winding (n,8) during the off period of the primary switch (n,4) circuitry for clamping the leakage inductance energy released across the primary winding (n,6) of the coupled inductor (n,5) on opening the primary switch (n,4) and recycling such energy into a load comprising:-
a storage capacitor (n,1)
a clamping MOSFET (n,2) connected in series with said storage capacitor (n,1)
a feedback winding (n,7) connected between the gate and source of said clamping MOSFET (n,2) whereby said clamping MOSFET (n,2) is biased on during the off cycle of said primary switch (n,4).

EP 0 350 297 A2

Bundesdruckerei Berlin

**Description**

## IMPROVED HIGH FREQUENCY SWITCHING IN COUPLED INDUCTOR POWER SUPPLIES

### FIELD

This invention relates to switching power supplies in particular to DC-DC converters which process electrical power using solid state switch(es) and a transformer or coupled inductor, from a DC source to deliver it to a load. Hence providing isolation and/or a voltage difference between the primary and secondary side. In particular this invention relates to coupled inductor type switching circuits more usually called fly-back converters and to Push Pull forward converters.

### PRIOR ART

Amongst examples of such power supply switching circuits is that shown in U.S. Patent Specification No. 4441146, 3rd April 1984 by Patrizio Vinciarelli. This specification discloses an invention in which the transformer's core in single ended forward converters is reset by a "magnetizing current mirror" consisting of a capacitor in series with a auxiliary switch which, during the OFF period of the primary switch, couples the capacitor to one of the transformer's windings to form a resonant circuit with the transformer's magnetizing inductance. The resonant circuit recycles the transformers magnatizing energy by creating a mirror image of the magnetic flux between ON periods. This maximizes the flux swing available within a given core. The voltage stress on the primary switch is minimized as the voltage acrossthe switch during the OFF period is approximately constant and automatically tailored to avoid dead time for arbitrary values of the switch duty cycle.

The Vinciarelli invention comprises placing a switch and capacitor across the primary of a transformer; however to implement the Vinciarelli invention for voltage conditions usually encountered by those skilled in the art, either a P channel MOSFET or an isolated drive for this switch would be required. The use of such devices in such a manner is undesirable and the present invention seeks to overcome the use of such devices.

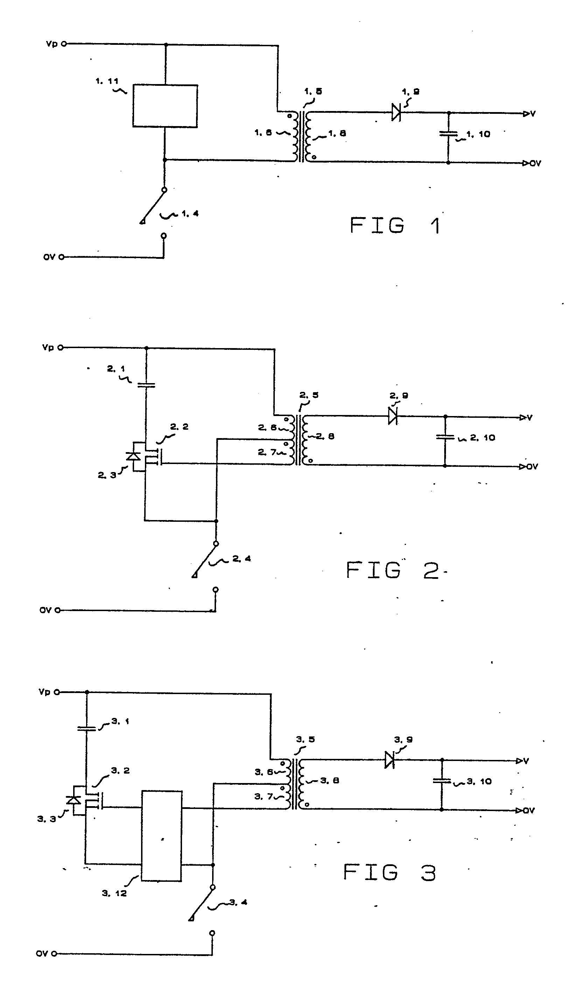

By way of an explanation the following describes the prior art technique when used in a coupled inductor switching circuit more usually known as a fly-back converter. see Fig. 1.

A fly-back converter is essentially an energy transfer circuit between the primary winding (n,6) and secondary winding (n,8) of a coupled inductor (n,5). On the forward cycle, energy is stored in the coupled inductor (n,5) by allowing current to flow in the primary winding (n,6) by closing the primary switch (n,4). The diode (n,9) in series with secondary winding (n,8) prevents the coupled inductor (n,5) acting as a transformer, so that no current flows in the secondary winding (n,8) on the forward cycle. After a set period of time or after a predetermined current threshold has been reached, the primary switch (n,4) is opened. The energy E stored in the coupled inductor (n,5) at this point is:

$$E = 1/2.L.I^2 \quad (1)$$

where
E = Energy stored (Joules)
L = Inductance (Henry's)
I = Current (Amps)

At the instant the primary switch (n,4) is opened the stored inductive energy is transferred to the secondary winding (n,8) because of the mutual inductance between the two windings, causing current to flow in the secondary winding (n,8) through diode (n,9) into output capacitor (n,10) having a voltage V. Where the size of output capacitor (n,10) is large, dumping the stored energy E from the coupled inductor (n,5) into the output capacitor (n,10) has minimal effect on the voltage V. For a coupled inductor (n,5) having a perfect coupling between the primary winding (n,6) and secondary winding (n,8) the reflected voltage across the primary switch (n,4) Vsw will be proportional to the ratio of the primary winding (n,6) and secondary winding (n,8) turns times the secondary voltage Vs added to the primary supply voltage Vp. This can be expressed as:

$$Vsw = Np.Vs/Ns + Vp \quad (2)$$

where
Vsw = The reflected voltage across the switch (volts)
Np = Number of turns on primary winding (n,6)
Ns = Number of turns on secondary winding (n,8)
Vs = Voltage across secondary winding (n,8) (volts)
Vp = Primary supply voltage (volts)

The secondary winding (n,8) voltage Vs is the output capacitor (n,10) storage voltage V plus the diode forward voltage drop Vd. This can be expressed as:

$$Vs = V + Vd \quad (3)$$

where
Vs = Voltage across secondary winding (n,8) (volts)
V = Voltage across output capacitor (n,10) (volts)
Vd = Forward voltage drop across diode (n,9) (volts)

The above equations apply fully for a perfectly coupled inductor; however, due to physical limitations in windings etc. the coupling between the primary winding (n,6) and secondary winding (n,8) can never be perfect. This imperfect coupling causes leakage inductance. When primary winding (n,6) current is flowing the leakage inductance energy stored has the effect of trying to maintain the current in the primary winding (n,6) once the primary switch (n,4) is opened. This causes a large reverse voltage spike on the primary switch (n,4) forcing the leakage inductance energy to be absorbed either by the primary switch (n,4) or by external circuitry. Usually the energy is dissipated in snubber or clamp circuits (n,11), causing increased losses. These losses are directly proportional to the switching frequency so that the use of very high frequencies (> 200 KHz) is not normally economic, though desirable, because of the use of smaller and cheaper transformer/coupled inductor cores.

In the drawings:-

FIG 1 shows the prior art for a coupled inductor or fly-back converter using a snubber or clamp network to dissipate the leakage inductance energy.

FIG 2 shows the first embodiment of the present invention in which a coupled inductor is used.

FIG 3 shows the second embodiment of the invention in which a coupled inductor is used together with a voltage level conditioning network connected to the gate of the clamp clamping MOSFET (n,2).

FIG 4 shows one embodiment of this invention when used with a push-pull forward converter.

FIG 5 shows a second embodiment of this invention when used with a push-pull forward converter.

FIG. 6 shows an embodiment of this invention when used with a P channel MOSFET and a coupled inductor used with an N type primary switch.

According to one aspect of the present invention there is provided:-

In a fly-back circuit in which the energy stored in a coupled inductor (n,5) on the forward cycle is transferred to a secondary winding (n,8) during the off period of the primary switch (n,4) circuitry for clamping the leakage inductance energy released across the primary winding (n,6) of the coupled inductor (n,5) on opening the primary switch (n,4) and recycling such energy into a load comprising:-

a storage capacitor (n,1)

a clamping MOSFET (n,2) connected in series with said storage capacitor (n,1)

a feedback winding (n,7) connected between the gate and source of said clamping MOSFET (n,2) whereby said clamping MOSFET (n,2) is biased on during the off cycle of said primary switch (n,4).

Another aspect of the present invention provides:-

In a push-pull forward converter in which energy is transferred from a centre tapped primary winding (n,6) to a secondary winding (n,8) during the on period of two or more primary switches (n,4) working with equal on duty cycles and opposite on/off phases. The improvement comprising means for clamping the leakage inductance energy released on opening either primary switch (n,4) across the associated half of the transformer (n,13) primary winding (n,6) and recycling this energy into a load comprising:-

a storage capacitor (n,1)

a clamping MOSFET (n,2) connected in series with said storage capacitor (n,1)

a feedback winding (n,7) connected between the gate and source of the clamping MOSFET (n,2) whereby said clamping MOSFET (n,2) is biased on by its apposing primary switch (n,4) when its associated primary switch (n,4) is biased off.

Following is a description by way of example only and with reference to the accompanying drawings of methods of carrying the invention into effect. FIG 2 shows one preferred embodiment of this invention shown in its simplest form when used with a fly-back converter. A storage capacitor is connected to the primary winding (n,6), positive supply side, and the other end connected to the drain of a single semi-conductor device known as a MOSFET. The source of the clamping MOSFET (n,2) is connected to the primary switch (n,4) and the primary winding (n,6) of the coupled inductor (,5). A feedback winding (n,7) of NF turns is connected to the source and gate of the clamping MOSFET (n,2).

On the forward cycle, when the primary switch (n,4) is closed, the clamping MOSFET (n,2) is biased off via the feedback winding (n,7). This prevents the loss of any charge from the storage capacitor (n,1) when the primary switch (n,4) is closed. On opening the primary switch (n,4) the leakage inductance is clamped via the parasitic diode (n,3) in the clamping MOSFET (n,2) and the storage capacitor (n,1), the size of which relative to the leakage inductance energy determines the maximum storage capacitor (n,1) voltage Vc. If the size of the storage capacitor (n,1) is chosen so that the resonant period Tr, set by the leakage inductance and storage capacitor (n,1) is large relative to the switching frequency period T, this can be expressed as:

$$Tr = 2.\pi \sqrt{Li.C} \qquad (4)$$

where

Tr = Resonant period of leakage inductance and storage capacitor (seconds)

Li = Leakage inductance (Henry's)

C = Storage capacitor (n,1) (Farads)

If the storage capacitor (n,1) is large (Tr ≫ T) the voltage across the storage capacitor (n,1) Vc remains almost constant, a very good approximation for the voltage across the storage capacitor (n,1) Vc can be determined by the ratio of the primary winding (n,6) and secondary winding (n,8) turns times the secondary winding (n,8) voltage Vs. This can be expressed as:

$$Vc = Np.Vs/Ns \qquad (5)$$

where

Vc = Voltage across storage capacitor (n,1) (volts)

Np = Number of turns on primary winding (n,6)

Ns = Number of turns on secondary winding (n,8)

Vs = Voltage across secondary winding (n,8) (volts)

The increased voltage caused by the injection of charge, from the leakage inductance energy, into the storage capacitor (n,1) reverse biases the MOSFET parasitic diode (n,3) once the leakage inductance energy has been transferred. This is important because of the inherent poor reverse recovery characteristics of this parasitic diode (n,3) which if reversed biased under switching conditions can lead to excessive switching losses. The clamping MOSFET (n,2) at this point is biased on via the feed back winding, so that this increase in voltage causes current to flow from the storage capacitor (n,1) through the primary winding (n,6) back into the supply until equilibrium has been reached with equation (5) being satisfied. During this discharge cycle the coupled inductor (n,5) acts like a transformer so that the leakage inductance energy is transferred directly to the load unlike most other non dissipative topologies where this energy is transferred back into the supply.

The on resistance of most propriety power MOSFET's available to date have on resistances of less than a few Ohms and with the parasitic diode (n,3) having a forward voltage drop of less than a volt the losses involved using this technique are very small.

Good design of coupled inductors can limit the leakage inductance, which is determined by the number of turns and the volume between the two windings. An approximation of the leakage inductance is given by:

Li = Uo.N.Ae/le     (5)

where

Li = Leakage inductance (Henry's)
Uo = Permeability of free space
N = Number of turns
Ae = Area of the tubular volume between winding centres
le = Length of window the winding is stretched across

However, modern safety standards are requiring ever greater insultation thickness between windings as well as greater creapage clearances. From Equation (5) it can be seen that both these effects increase leakage inductance giving rise to greater losses where this energy is dissipated using the traditional snubber/clamping techniques. This in turn gives rise to lower supply efficiency and often increased size.

Fly-back converters using the above described method can be used with split bobbin windings, i.e. the primary winding (n,6) and secondary winding (n,8) are wound side by side, this has the effect of amplifying the leakage inductance ten or more times above that normally expected when the secondary winding (n,8) is wound over the primary winding (n,6) as is the usual case. Although undesirable from an electrical point of view, because of the high leakage inductance split bobbin windings are the most cost effective method of meeting stringent creapage clearances required by the various safety bodies. Split bobbin windings are also the favoured way of producing a high voltage secondary winding (n,8) or where very high isolation voltages are required between the primary winding (n,6) and secondary winding (n,8).

Another inherent advantage of this invention is the complete lack of voltage switching spikes on the switching device, normally a MOSFET. This allows the use of much lower peak voltage rated device than would be used for most other fly back topologies. This is a major advantage in that lower voltage rated MOSFET's tend to be considerably cheaper than higher voltage rated devices required for most other fly back topologies. Keeping the cost variable constant, the lower the MOSFET voltage rating the lower the on resistance is, having obvious efficiency advantages.

A technique often used by some manufacturers is increasing the switching time of the switching device to dissipate some of the stored leakage inductance energy in the switching device. This is especially common in some of the lower wattage supplies (<30W) and can be a cost effective technique, but efficiency tends to be low due to the increased switching losses. Using the above described invention minimum on/off switching times are encouraged so keeping the switching losses to an absolute minimum increasing efficiency etc.

FIG 3 shows a second embodiment of the invention where a voltage level conditioning network (n,12 is added between the feedback winding (n,7) and the clamping MOSFET (n,2). This technique can be beneficial to use where the winding ratios between primary winding (n,6) and secondary winding (n,8) are unsuitable to obtain the correct feedback voltages from the feedback winding (n,7) directly.

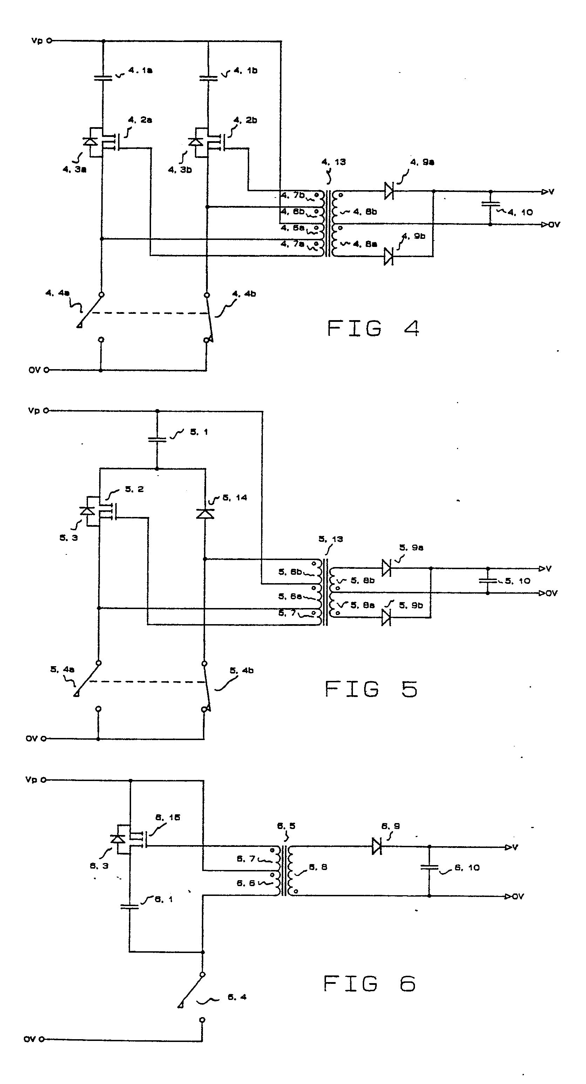

By way of a further example FIG 4 is a third embodiment of the invention when used in a transformer coupled circuit more usually known as a push-pull converter.

A brief operational description will only be given here as those skilled in the art will be familiar with this technology and its workings. The operation of the puh-pull converter is by alternately switching the primary switches (n,4) on and off with opposite phases and equal duty cycles this operation ensures that the magnetic flux swing in the transformer (n,13) is bipolar so that no resetting of the magnetization energy using this invention is taking place. This is important as this invention can only be considered for use with transformer type topologies where the resetting of the transformer magnetization energy is by other means inherent in the switching topology used, i.e. as with the push-pull converter type topology. Resetting the magnetization energy by a similar technique used for Single Ended Forward converters is described by Patrizio Vinciarelli U.S. Patent Specification No. 4441146, 3rd April 1984.

With the push-pull converter only one storage capacitor (n,1) is required with the two clamping MOSFET's (n,2) and their respective feedback windings (n,7).

FIG 5 shows a fourth embodiment of the invention where one of the clamping MOFEST's (n,2) shown in FIG 4 is replaced by a diode (n,14) this has obvious simplification and cost advantages.

With the push-pull converter as with the fly back converter split bobbin technology can be employed, with its inherent advantages and with none of the normal disadvantages associated with this winding configuration. Also the winding layout of the primary windings (n,6) becomes non critical. Normally the two primary windings (n,6) are bi-filar wound to give maximum coupling to limit the voltage spikes produced on the primary switching devices (n,4). Using this invention the primary windings (n,6) can be wound on top of each other, other than the obvious advantage of a cheaper transformer (n,13) this method also allows the use of inter-winding insulation (tape) allowing the supply voltage to be increased above that of the actual wire insulation not normally achievable for bi-filar wound transformer primaries.

The examples so far given in this document have all used N channel clamping MOSFET's (n,2) however P channel clamping MOSFET's (n,2) could be used, with equal effect, by reversing the switch(es) and coupled inductor/transformer position etc. As the state of the technology presently stands, N channel MOSFET's are cheaper and have better performance characteristics than P channel devices so examples of all P channel MOSFET switching circuits have not been included but will be apparent to those skilled in the art.

FIG 6 shows an example of a P channel clamping MOSFET (n,15) used with an N type primary switch (n,4).

## Claims

1. In a fly-back circuit in which the energy stored in a coupled inductor (n,5) on the forward cycle is transferred to a secondary winding (n,8) during the off period of the primary switch (n,4) circuitry for clamping the leakage inductance energy released across the primary winding (n,6) of the coupled inductor (n,5) on opening the primary switch (n,4) and recycling such energy into a load comprising:-
a storage capacitor (n,1)
a clamping MOSFET (n,2) connected in series with said storage capacitor (n,1)
a feedback winding (n,7) connected between the gate and source of said clamping MOSFET (n,2) whereby said clamping MOSFET (n,2) is biased on during the off cycle of said primary switch (n,4).

2. In a push-pull forward converter in which energy is transferred from a centre tapped primary winding (n,6) to a secondary winding (n,8) during the on period of two or more primary switches (n,4) working with equal on duty cycles and opposite on/off phases. The improvement comprising means for clamping the leakage inductance energy released on opening either primary switch (n,4) across the associated half of the transformer (n,13) primary winding (n,6) and recycling this energy into a load comprising:-
a storage capacitor (n,1)
a clamping MOSFET (n,2) connected in series with said storage capacitor (n,1)
a feedback winding (n,7) connected between the gate and source of said clamping MOSFET (n,2) whereby said clamping MOSFET (n,2) is biased on by its apposing primary switch (n,4) when its associated primary switch (n,4) is biased off.

3. Apparatus as claimed in Claim 1 or Claim 2 wherein the feedback winding(s) (n,7) can be isolated or connected to the primary winding(s) (n,6).

4. Apparatus as claimed in Claim 1 or Claim 2 wherein a voltage level conditioning network(s) (n,12) is disposed between the feedback winding(s) (n,7) and the clamping MOSFET's (n,2).

5. Apparatus as claimed in Claim 2 wherein the two individual storage capacitors (n,1) one for each transformer (n,13) primary winding (n,6) half are replaced by a single storage capacitor (n,1) connected in series to a parallel clamping MOSFET (n,2) combination.

6. Apparatus as claimed in any one of Claims 2 to 5 wherein one of the clamping MOSFET's (n,2) and its associated feedback winding (n,7) is replaced with diode means (n,14).

7. Apparatus as claimed in any preceding claim wherein the MOSFET P channel clamping MOSFET's (n,15) or an N channel clamping MOSFET's (n,2) can be used.

8. Apparatus as claimed in Claim 1 or Claim 2 and substantially as herein described with reference to and as illustrated in Figures 2 to 6 of the accompanying drawings.

FIG 1

FIG 2

FIG 3

FIG 4

FIG 5

FIG 6